# EUROPEAN PATENT SPECIFICATION

(11) **EP 0 755 472 B1**
(45) Date of publication and mention of the grant of the patent: **04.03.1998**
(21) Application number: 95915252.1
(22) Date of filing: 12.04.1995
(51) Int. Cl.: E04B 1/94, C09J 1/02, C09K 21/02, C09K 21/14, B32B 7/12

(54) **LIGHTWEIGHT INSULATING PANELS**
LEICHTBAU-WÄRMEDÄMMPLATTEN
PANNEAUX D'ISOLATION LEGERS

(30) Priority: 13.04.1994 GB 9407314
(43) Date of publication of application: 29.01.1997
(73) Proprietor: CROMPTON, Geoffrey, Southport, Merseyside PR9 0LG (GB)
(72) Inventor: CROMPTON, Geoffrey, Southport, Merseyside PR9 0LG (GB)
(74) Representative: Lyons, Andrew John
(86) International application number: GB9500841
(87) International publication number: WO9528531

(56) References cited:
- EP-A- 0 036 616
- EP-A- 0 183 393
- WO-A-90/01527
- AU-B- 499 746
- FR-A- 2 295 103
- FR-A- 2 384 834
- FR-A- 2 496 144
- GB-A- 2 234 754
- GB-A- 2 274 665
- DATABASE WPI Section Ch, Week 8641 Derwent Publications Ltd., London, GB; Class A21, AN 86-267300 & JP,A,61 192 549 ( TOYO RUBBER IND KK) , 27 August 1986

## Description

This invention concerns lightweight panels which are insulating and have low smoke and toxic fume emissions under fire conditions.

Within public transportation the aspects of weight and fire safety have become major issues. Fires in underground railway systems are disastrous reminders of the need to limit spread of flame and emission of smoke and toxic fumes.

The shipping industry has upto now been required by international rules to use non-combustible materials for fire resisting divisions. Therefore, steel bulkheads, which in a fire situation could glow cherry red, have had to be used.

With the development of the new IMO Code of Safety for high speed craft there are now provisions for introducing new materials in this rapidly growing category of vessels. Conventional ferries and cruise ships also have weight problems relating to damage stability requirements. With the introduction of aluminium into superstructures of modern ferries, a method of protecting the construction from meltdown in a fire is essential.

Panel systems are known which performed to desired fire criteria but are unfortunately comparatively heavy. Some are made of steel and concrete whilst others are laminates of resin pre-impregnated glass cloth where multi-layers are needed to achieve the desired standard.

Another common form of fire barrier has a wooden or metal framework containing pads or a lamella of rock wool and faced with plaster board.

Phenolic resin foam has very good insulation qualities but cannot last more than an A30 test without additional protection. Such protection usually adds considerably to the weight and there is a problem with fixing a front face to the foam to avoid delamination during a fire situation. Additionally, additives, such as frits which are capable of melting progressively and, optionally, ceramic and/or basalt fibres or powders, can be included in the material to enhance the fire resistance properties thereof. (See GB-2234754).

An object of this invention is to provide lightweight panels which are insulating and have low smoke and toxic fume emissions under fire conditions.

According to this invention there is provided a lightweight panel which includes an adhesive capable of holding together char formed from the panel in a fire situation containing one or more powdered fire resistant materials characterised in that the panel comprises two or more layers of phenolic foam adhered together by means of said adhesive, the panel being faced with a metal sheet or foil.

Suitable adhesives for use in the invention may include sodium silicate based adhesives and resorcinol phenol formaldehyde based adhesives.

Suitable fire resistant materials for use in the invention may include, for example, one or more frits, mica, zinc borate, alumina trihydrate, hydrated calcium magnesium carbonate, hydrated calcium carbonate and zinc oxide.

For a sodium silicate adhesive it is preferable to include a substance that will convert silicate to silica under fire conditions. Such a substance may be selected from zinc oxide, china clay, ball clay kaolin and silica itself.

Frits are generally required to hold the panels together under fire conditions. Sodium silicate intumesces at about 460°C and turns to powder, whereas the frit or frits can be chosen to melt and fuse at a lower temperature so as to hold the panels together. Mica may be added to extend the performance of frits.

A typical powder blend is for sodium silicate adhesive, for example, as follows:

| | Parts by Weight |
|---|---|
| Hydrated calcium magnesium carbonate and/or alumina trihydrate | 20-40 especially 30 |
| Hydrated calcium carbonate | 0-5 |
| One or more frits | 10-50 especially 20 |
| Mica | 10-40 especially 10 |
| Zinc borate | 5-30 especially 10 |
| Zinc Oxide | 10-50 |

The powder mix is preferably added to the adhesive in an amount of from 5 to 30 parts by weight per 100 parts by weight of adhesive. When alumina trihydrate and hydrated magnesium calcium carbonate are used together their weight ratio is preferably 1:2.

For resorcinol phenol formaldehyde based adhesives preferably only one or more frits and/or mica are added. Ammonium polyphosphate may be added to resorcinol based adhesives on a fire resisting material.

The panels of the invention may include one or more layers of other material, such as, for example, aluminium, glass cloth, glass needle mat, ceramic paper and stainless steel.

In the preferred embodiment of the invention a panel comprises relatively thin layers of phenolic resin foam bonded together with the adhesive. In a fire situation the layer nearest the heat chars and that char, held together with the activated adhesive, protects the second layer and so on. Such panels may be faced with aluminium treated on its outer face with the powder/adhesive mix also containing chopped glass strand or glass cloth soaked in the adhesive mix. An alternative preferred facing for panels of the invention is rigidised stainless steel foil.

Panels according to the invention may be capped on their edges with a lightweight channel formed from a suitable material such as pre-impregnated phenolic resin glass cloth to protect the phenolic foam from direct contact with flame. The channels are preferably formed to give an interlocking effect when the panels are assembled to form a fire barrier.

The panels may be further locked together with a system of phenolic resin pultrusions or dough mouldings in the form of pins or dowels and clips. A preferred method includes pultruded or dough moulded pins which pick up a high heat resistant steel wire within the fixing method and tension the panels together, both vertically and horizontally. Phenolic resin used for this purpose preferably contains fire retardant powder mixes of the type mentioned above to prolong the life of the part in fire conditions.

The use of phenolic resin containing a powder blend of fire resistant materials and char promoters in a pultrusion, dough moulding or other suitable method of production gives a product which does not substantially transmit heat and which substantially retains its ability to hold the panels together during a fire.

The invention will now be further described, by way of example only, with reference to the accompanying drawings, in which:-
Figure 1 shows a panel according to the invention;
Figure 2 shows a joint formed between panels of figure 1;
Figure 3 shows a further example of a panel of the invention.

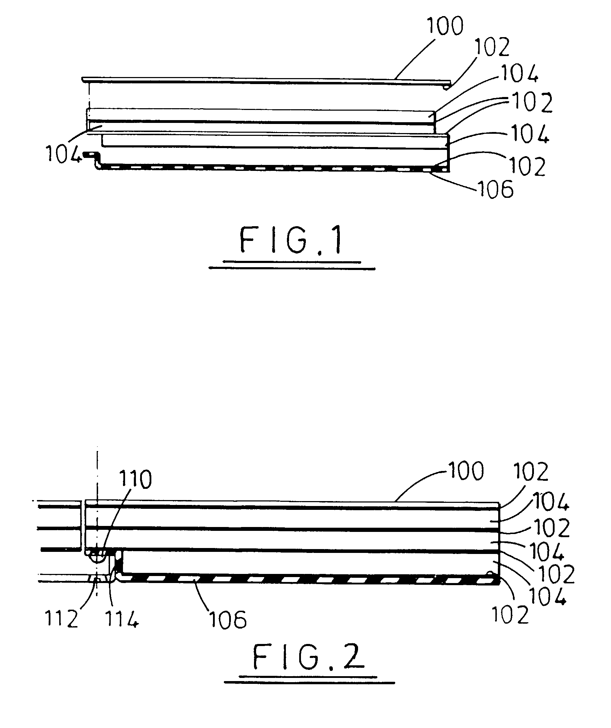

Referring to Figures 1 and 2 of the accompanying drawings, a lightweight panel has layers of phenolic foam 104 adhered together and faced with a metal sheet or foil 106. The adhesive may include one or more fire retardant powder materials, such as one or more frits, mica, zinc borate, alumina trihydrate, hydrated calcium magnesium carbonate, ammonium polyphosphate and zincoxide. In a fire situation the layer nearest the heat chars and the char held together with the activated adhesive protects the second layers and so on.

It has been found by fire test to BS47 parts 20-22 and A60, that it is possible to extend the life and, therefore, the insulation qualities of phenolic resin foam in lightweight firesafe panels by using an adhesive which is composed of sodium silicate, one or more frits, mica, zinc borate and zinc oxide, the powders being at 25 parts by weight each to 500 parts by weight of the sodium silicate. This adhesive or a resorcinol phenolic resin adhesive substituted in the same proportion as the sodium silicate, is used to laminate thin layers of phenolic foam together to form a panel where the front faces can form a char in a fire situation. As the heat penetrates it reaches the next layer of adhesive and that in turn helps to promote a cohesive layer of char to protect the remaining laminations. It is possible to calculate the number of layers needed to satisfy the various criteria regarding insulation for a set period of time. This method has the advantage of nil-spread of flame, low smoke production and low toxic fume emission, those fumes produced being mainly carbon dioxide which is used to stop spread of flame.

The panel has a back face 100 composed of a pressed laminate of two pre-impregnated glass cloth sheets. The resin used being phenolic, sometimes of the aqueous emulsion type, containing a powder mix of the type specified. The back face is adhered to a phenolic foam layer 104 by means of an adhesive layer 102 either based on sodium silicate or phenolic resin. It has been found that a resorcinol phenol formaldehyde with the powder specified added to the hardener powder is effective. The sodium silicate with powders is also effective and, in particular, does not give off smoke and toxic fumes. The panel has further layers of phenolic foam and adhesive and is finished with an aluminium sheet 106 formed to aid fixing or alternatively a laminated phenolic pre-impregnated glass cloth sheet or stainless steel foil. The panels are fixed together using non-heat conductive fixings 110 based on phenolic pultrusions or dough mouldings to fix the recessed edge to the back support 106 and a non-heat conducting fixing 112 to fix the front lip to the recessed edge. Silicone or butadiene filled with the fire resistant powder mix, applied as an extrusion L-shaped sealing bead 114 is fitted between abutting panel edges. The material used for items 110, 112 and 114 will expand during a fire because of the action of the powder additives. The expansion is in the order of twice the original thickness and is sufficient to fill the gap between panels and stop fire penetration.

If aluminium is chosen as the front face, ie the face that would be exposed to fire, then, since the melt temperature is around 650°C, it is desirable to raise the melt temperature to at least 950°C or beyond, which is the temperature reached at the end of an A60 fire test. It has been found that two coats of the above described sodium silicate adhesive and fire resistant powder mix additionally with chopped glass strand or glass cloth on the front face of the aluminium which is painted using a non-toxic, low smoke, nil-spread flame paint such as CEEPREE (trade mark) containing polyepoxide paint and produced by H Marcel Guest, can have this effect.

Similarly, adhering a phenolic resin and powder pre-impregnated laminate as described on the front face, can have the same effect. A combination of the sodium silicate adhesive and the phenolic laminate can be made easier by the introduction of a silica paper or glass tissue or cloth on the inner face of the laminate, the object being to achieve a bond between the inner surface of the additional material and the inner surface of the laminate during its manufacturing cycle, without complete encapsulation. Thus, a mechanical bond can be made using sodium silicate and powder adhesive, which material has the effect of making even paper non-flammable.

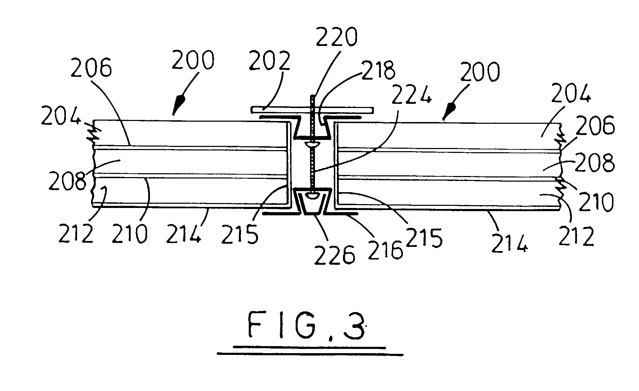

Finally in Figure 3 of the accompanying drawings panels 200 are shown fixed together and to a substrate represented by 202. Each panel 200 has successively from its hidden face a layer of phenolic foam 204, a layer of sodium silicate adhesive 206, a layer of phenolic foam 208, a layer of sodium silicate adhesive 210, a layer of phenolic foam 212 and a layer of rigidised stainless steel foil 214 (thickness approximately 0.1mm). The end face of each panel also has a coating of intumescent material 215.

The sodium silicate adhesive used contains one or more fire retardant additives, such as one or more frits, mica, zinc borate, zinc oxide and alumina trihydrate, hydrated magnesium calcium carborate or hydrated calcium carborate. The phenolic foam layers may contain one or more fire retardant materials as aforesaid.

In order for the panels 200 to be easily removable a fixing method has been chosen as illustrated. Top-hat section strips 216, 218 with crowns inboard are positioned between ends of adjacent panels. The inner strip 216 is joined to the substrate 202 by screws 220 and the outer strip 218 is joined to the inner strip 216 by screws 224. The screw heads 224 are hidden by a snap-in cover strip 226. The intumescent material 215 is provided to protect these fixings under fire conditions by swelling and preventing flame spread between the panels. Removal of the outer strips 218 at each end of a panel allows it to be removed easily.

## Claims

1. A lightweight panel which includes an adhesive capable of holding together char formed from the panel in a fire situation containing one or more powdered fire resistant materials, characterised in that the panel comprises two or more layers of phenolic foam adhered together by means of said adhesive, the panel being faced with a metal sheet or foil.

2. A panel as claimed in claim 1, wherein the adhesive is selected from sodium silicate based adhesives and resorcinol phenol formaldehyde based adhesives.

3. A panel as claimed in claims 1 or 2, wherein the adhesive contains one or more fire resistant materials selected from one or more frits, mica, zinc borate, aluminium trihydrate, hydrated calcium magnesium carbonate, hydrated calcium carbonate and zinc oxide.

4. A panel as claimed in any one of claims 1 to 3, wherein the adhesive is sodium silicate and contains a powder blend of fire resistant materials as follows:
| | Parts by weight |
|---|---|
| Hydrated calcium magnesium carbonate and/or alumina tryhydrate | 20 - 40 |
| Hydrated calcium carbonate | 0 - 5 |
| One or more frits | 10 - 50 |
| Mica | 10 - 40 |
| Zinc borate | 5 - 30 |
| Zinc oxide | 10 - 50 |

5. A panel as claimed in claim 4, wherein the powder mix is as follows:
| | Parts by weight |
|---|---|
| Hydrated calcium magnesium carbonate and/or alumina trihydrate | 30 |
| Hydrated calcium carbonate | 0 - 5 |
| One or more frits | 20 |
| Mica | 10 |
| Zinc borate | 10 |
| Zinc oxide | 10 - 50 |

6. A panel as claimed in claims 4 or 5, wherein the powder mix is present in the adhesive in an amount of from 5 to 30 parts by weight per 100 parts by weight of adhesive.

7. A panel as claimed in claims 4, 5 or 6, wherein when alumina trihydrate and hydrated magnesium calcium carbonate are used together, their weight ratio is 1:2.

8. A panel as claimed in any one of claims 1 to 3, wherein the adhesive is resorcinol phenol formaldehyde based and contains one or more frits and/or mica as a powder mix.

9. A panel as claimed in any one of claims 1 to 8 comprising one or more layers of other materials selected from aluminium, glass cloth, glass needle mat, ceramic paper and stainless steel.

10. A panel as claimed in any one of claims 1 to 9, wherein the metal foil is a rigidised stainless steel foil.

## Patentansprüche

1. Leichtgewichtige Verkleidung mit einem Klebstoff, der dazu befähigt ist, aus Verkleidungen im Brandfalle gebildete Verkohlungsprodukte zusammenzuhalten, der ein oder mehrere pulverförmige feuerresistente Materialien aufweist, dadurch gekennzeichnet, daß die Verkleidung zwei oder mehr Schichten Phenolharzschaum aufweist, die mittels des Klebstoffes aneinandergeklebt sind, wobei die Verkleidung mit einer Metallplatte oder -folie abgedeckt ist.

2. Verkleidung nach Anspruch 1, wobei der Klebstoff ausgewählt ist aus Klebstoffen auf Natriumsilikat-Basis und Resorcinolphenolformaldehyd-Basis.

3. Verkleidung nach Anspruch 1 oder 2, wobei der Klebstoff ein oder mehr feuerresistente Materialien aufweist, ausgewählt aus der Gruppe bestehend aus Fritten, Glimmer, Zinkborat, Aluminiumoxid-Trihydrat, Calciummagnesiumcarbonat Hydrat, Calciumcarbonathydrat und Zinkoxid.

4. Verkleidung wie in irgendeinem der Ansprüche 1 bis 3 beansprucht, wobei der Klebstoff Natriumsilikat ist und die folgende Pulvermischung feuerresistenter Materialien enthält.
| | Gewichtsteile |
|---|---|
| Calciummagnesiumcarbonat Hydrat und/oder Aluminiumoxid-Trihydrat | 20 - 40 |
| Calciumcarbonathydrat | 00 - 05 |
| eine oder mehrere Fritten | 10 - 50 |
| Glimmer | 10 - 40 |
| Zinkborat | 5 - 30 |
| Zinkoxid | 10 - 50 |

5. Verkleidung wie in Anspruch 4 beansprucht, wobei die Pulvermischung wie folgt ist:
| | Gewichtsteile |
|---|---|
| Calciummagnesiumcarbonat Hydrat und /oder Aluminiumoxid-Trihydrat | 30 |
| Calciumcarbonathydrat | 0 - 5 |
| eine oder mehrere Fritten | 20 |
| Glimmer | 10 |
| Zinkborat | 10 |
| Zinkoxid | 10 - 50 |

6. Verkleidung wie in den Ansprüchen 4 oder 5 beansprucht, wobei die Pulvermischung im Klebstoff in einer Menge von 5 bis 30 Gewichtsteilen pro 100 Gewichtsteile Klebstoff vorliegt.

7. Verkleidung wie in Anspruch 4, 5 oder 6 beansprucht, wobei dann, wenn Aluminiumoxid-Trihydrat und Calciummagnesiumcarbonathydrat gemeinsam verwendet werden, ihr Gewichtsverhältnis 1:2 beträgt.

8. Verkleidung wie in irgendeinem der Ansprüche 1 bis 3 beansprucht, wobei der Klebstoff auf Resorcinol/Phenol/Formaldehydbasis ist und ein oder mehr Fritten und/oder Glimmer als Pulvermischung enthält.

9. Verkleidung wie in irgendeinem der Ansprüche 1 bis 8 beansprucht, die ein oder mehrere Schichten andere Materialien, ausgewählt aus Aluminium, Glasfasergewebe, genadelten Glasfasermatten, Keramikpapier und rostfreiem Stahl aufweist.

10. Verkleidung wie in irgendeinem der Ansprüche 1 bis 9 beansprucht, wobei die Metallfolie eine versteifte Folie aus rostfreiem Stahl ist.

## Revendications

1. Un panneau léger qui comprend un adhésif capable de maintenir ensemble les produits charbonneux provenant du panneau dans une situation d'incendie, contenant un ou plusieurs matériaux résistants au feu en poudre. caractérisé en ce que le panneau comprend deux ou plusieurs couches de mousse phénolique adhérant ensemble grâce audit adhésif, le panneau portant en surface une feuille ou plaque de métal.

2. Un panneau selon la revendication 1, dans lequel l'adhésif est choisi parmi des adhésifs à base de silicate de sodium et des adhésifs à base de résorcinol phénol formaldéhyde.

3. Un panneau selon la revendication 1 ou 2, dans lequel l'adhésif contient une ou plusieurs matières résistant au feu choisies parmi un ou plusieurs frittes. mica, borate de zinc, aluminium trihydrate, carbonate de calcium et de magnésium hydraté, carbonate de calcium hydraté et oxyde de zinc.

4. Un panneau selon une quelconque des revendications 1 à 3 dans lequel l'adhésif est le silicate de sodium et qui contient un mélange en poudre de matières résistant au feu suivantes :
| | Parties en poids |
|---|---|
| Carbonate de calcium et de magnésium hydraté et/ou trihydrate d'alumine | 20 - 40 |
| Carbonate de calcium hydraté | 0 - 5 |
| Une ou plusieurs frittes | 10 - 50 |
| Mica | 10 - 40 |
| Borate de zinc | 5 - 30 |
| Oxyde de zinc | 10 - 50 |

5. Un panneau selon la revendication 4, dans lequel le mélange de poudre a la composition suivante :
| | Parties en poids |
|---|---|
| Carbonate de calcium et de magnésium hydraté et/ou trihydrate d'alumine | 30 |
| Carbonate de calcium hydraté | 0 - 5 |
| Une ou plusieurs frittes | 20 |
| Mica | 10 |
| Borate de zinc | 10 |
| Oxyde de zinc | 10 - 50 |

6. Un panneau selon la revendications 4 ou 5, dans lequel le mélange de poudre est présent dans l'adhésif à raison de 5 à 30 parties en poids pour 100 parties en poids d'adhésif.

7. Un panneau selon une quelconque des revendications 4, 5 ou 6, dans lequel, lorsqu'on utilise ensemble du trihydrate d'alumine et du carbonate de magnésium et de calcium hydraté, leur rapport pondéral est de 1:2.

8. Un panneau selon une quelconque des revendications 1 à 3, dans lequel l'adhésif est à base de résorcinol phénol formaldéhyde et contient un ou plusieurs frittes et/ou mica sous forme de mélange de poudre.

9. Un panneau selon une quelconque des revendications 1 à 8, comprenant une ou plusieurs couches d'autres matières choisies parmi alumine, laine de verre, nappe d'aiguille de verre, papier céramique et acier inoxydable.

10. Un panneau selon une quelconque des revendications 1 à 9, dans lequel la feuille métallique est une feuille en acier inoxydable rigidifiée.
